# EUROPÄISCHE PATENTSCHRIFT

(11) **EP 1 636 515 B1**
(45) Veröffentlichungstag und Bekanntmachung des Hinweises auf die Patenterteilung: **03.12.2008**
(21) Anmeldenummer: 04714723.6
(22) Anmeldetag: 26.02.2004
(51) Int. Cl.: F16H 37/04

(54) **ELEKTROMOTOR FÜR AUTOMATISIERTE SCHALTGETRIEBE**
ELECTRIC MOTOR FOR AN AUTOMATIC MANUAL TRANSMISSION
MOTEUR ELECTRIQUE CON U POUR UNE BOITE DE VITESSES AUTOMATIQUE

(30) Priorität: 06.06.2003 DE 10325737
(43) Veröffentlichungstag der Anmeldung: 22.03.2006
(73) Patentinhaber: ROBERT BOSCH GMBH, 70442 Stuttgart (DE)
(72) Erfinder: MEIER, Helmut, 77871 Renchen (DE); FORNOFF, Dieter, 76356 Weingarten (DE); DILGER, Werner, 77815 Buehl (DE); WEHRLE, Andreas, 77652 Offenburg (DE)
(86) Internationale Anmeldenummer: PCT/DE2004/000355
(87) Internationale Veröffentlichungsnummer: WO 2004/111497

(56) Entgegenhaltungen:
- EP-A- 1 143 165
- DE-A- 19 904 021
- FR-A- 2 568 652
- US-A1- 2002 111 241

## Beschreibung

### Stand der Technik

Die vorliegende Erfindung betrifft einen Elektromotor mit einem an einer Ankerwelle des Elektromotors angeordneten Schneckengetriebe.

Aus dem Stand der Technik ist es bekannt, Elektromotoren für eine Anwendung bei automatisierten Schaltgetrieben einzusetzen. Derartige Elektromotoren weisen üblicherweise einstufige Schneckengetriebe auf, wobei das Schneckengetriebe auf einer Ankerwelle des Elektromotors angeordnet ist. Abhängig von der Art und der jeweiligen Größe der automatisierten Schaltgetriebe werden unterschiedliche Abtriebsmomente für den automatischen Schaltvorgang benötigt. Die höheren Abtriebsmomente ermöglichen dabei höhere Schaltkräfte für ein Schalten größerer Getriebe. Entsprechend den jeweiligen Anforderungen der automatisierten Schaltgetriebe wurden daher bisher unterschiedlich elektrisch ausgelegte Elektromotoren mit unterschiedlichen Abtriebsmomenten eingesetzt. Grundsätzlich weisen Elektromotoren jedoch für ein höheres Abtriebsmoment auch größere Abmessungen und dementsprechend auch größere Gewichte auf. Somit müssen für unterschiedliche Anwendungsfälle bei automatisierten Schaltgetrieben eine Vielzahl unterschiedlich ausgelegter Elektromotoren bereitgehalten werden.

Die DE 199 04 021 A zeigt einen Elektromotor, der als Schalt- oder Wählmotor eines automatischen Schaltgetriebes dient. Dabei ist eine Schnecke auf einer Ankerwelle angeordnet, die mit einem Schneckenrad zusammenwirkt, mit dem ein Zahnrad drehfest verbunden ist

Mit der FR-A-2 568 652 ist eine Antriebseinheit bekannt geworden, bei dem einem motorisch angetriebenen Schneckengetriebe ein Planetengetriebe nachgeordnet ist. Dabei ist der Steg des Planetengetriebes fest mit einer drehbar gelagerten Getriebewelle verbunden.

### Vorteile der Erfindung

Der erfindungsgemäße Elektromotor mit den Merkmalen des Patentanspruchs 1 weist demgegenüber den Vorteil auf, dass im Vergleich mit dem Stand der Technik bei einer gleichen elektrischen Auslegung des Elektromotors ein höheres Abtriebsmoment erhalten werden kann oder bei im Vergleich mit dem Stand der Technik gleichem Abtriebsmoment eine schwächere elektrische Auslegung des Elektromotors möglich ist. Dies wird erfindungsgemäß durch Anordnung eines weiteren Getriebes nach dem an der Ankerwelle des Elektromotors angeordneten Schneckengetriebes erreicht. Somit können im Vergleich mit dem Stand der Technik bei einem baugleichen Elektromotor durch die höheren Abtriebsdrehmomente höhere Schaltkräfte bereitgestellt werden. Dadurch können für unterschiedliche automatisierte Schaltgetriebe gleiche Elektromotoren verwendet werden und die unterschiedlichen Abtriebsdrehmomente durch Verwendung unterschiedlicher Getriebe bereitgestellt werden. Dadurch können die in automatisierten Schaltgetrieben verwendeten Elektromotoren einen minimalen Bauraum einnehmen und gleichzeitig können durch Standardisierung der Elektromotoren für unterschiedliche automatisierte Schaltgetriebe die Herstellungskosten gesenkt werden.

Besonders vorteilhaft ist dabei, daß der Steg des Planetengetriebes mit einem Abtriebszahnrad verbunden ist. Um dabei eine leichte Adaption an unterschiedliche automatisierte Schaltgetriebe zu ermöglichen, ist vorzugsweise zwischen dem Steg des Planetenrades und dem Abtriebszahnrad ein weiteres Abtriebselement angeordnet. Dabei ist das weitere Abtriebselement austauschbar angeordnet, so dass durch einfachen Austausch dieses Abtriebselements und/oder Austausch des Abtriebszahnrads eine einfache Adaption des Elektromotors an unterschiedliche automatisierte Schaltgetriebe möglich ist. Dadurch können die Elektromotoren sehr kostengünstig in einer Großserienproduktion hergestellt werden, da sie eine große Anzahl von Gleichteilen aufweisen.

Die Unteransprüche zeigen bevorzugte Weiterbildungen der Erfindung.

Um einen möglichst geringen Bauraum einzunehmen, ist das Getriebe vorzugsweise ein integraler Bestandteil des Elektromotors.

Besonders bevorzugt ist ein Schneckenrad des Schneckengetriebes integral, d.h. einstückig, mit einem Eingangszahnrad des Getriebes gebildet. Somit umfasst das Schneckenrad ein zahnradartiges Abtriebsteil.

Das dem Schneckengetriebe nachgeschaltete Getriebe ist besonders bevorzugt ein Planetengetriebe. Vorzugsweise ist dabei das auf dem Schneckenrad befindliche Abtriebsrad das Sonnenrad des Planetengetriebes. Dieses Sonnenrad treibt die Planetenräder an, welche sich in einem außen feststehenden, innenverzahnten Hohlrad abwälzen. Die Anzahl der Planetenräder ist dabei ≥ 1.

Weiter bevorzugt ist das Abtriebselement des Planetengetriebes ein Steg, auf dem die Achsen der Planetenräder gelagert sind.

Weiter bevorzugt ist das Abtriebszahnrad auf einer Welle gelagert, auf welcher auch das Schneckenrad des Schneckengetriebes angeordnet ist. Dadurch wird ein besonders kompakter Aufbau ermöglicht und der Elektromotor nimmt einen minimalen Bauraum ein.

Um eine Vielzahl weiterer unterschiedlicher Abtriebsmomente des Elektromotors bereitzustellen, ist dem Planetengetriebe mindestens ein zweites Planetengetriebe nachgeschaltet. Dadurch kann eine Vielzahl von Variationen hinsichtlich des Abtriebsdrehmoments und somit hinsichtlich der notwendigen Schaltkräfte ermöglicht werden. Dabei ist es selbstverständlich auch möglich, noch weitere Planetengetriebe oder andere Getriebe nachzuschalten.

### Zeichnung

Nachfolgend wird ein Ausführungsbeispiel der vorliegenden Erfindung unter Bezugnahme auf die begleitende Zeichnung beschrieben. In der Zeichnung ist:
- Figur 1: eine schematische Seitenansicht eines Elektromotors gemäß einem ersten Ausführungsbeispiel der vorliegenden Erfindung und
- Figur 2: eine schematische, teilweise geschnittene Ansicht des in Figur 1 gezeigten Elektromotors.

### Beschreibung des Ausführungsbeispiels

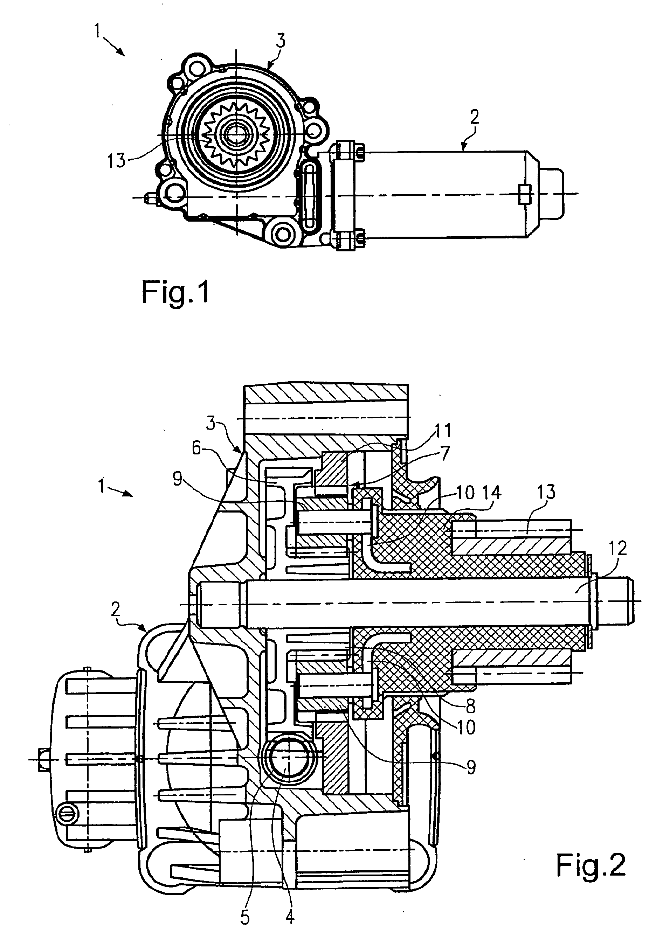

Nachfolgend wird unter Bezugnahme auf die Figuren 1 und 2 ein Elektromotor 1 gemäß einem ersten Ausführungsbeispiel der Erfindung beschrieben.

Wie in Figur 1 gezeigt, umfasst der Elektromotor 1 einen eigentlichen Motorteil 2 und einen Getriebeteil 3. Der Getriebeteil 3 ist dabei integraler Bestandteil des Elektromotors 1.

Wie aus Figur 2 ersichtlich ist, ist auf einer Ankerwelle 4 des Elektromotors eine Schnecke 5 angeordnet. Die Schnecke 5 greift in ein auf einer Welle 12 gelagertes Schneckenrad 6 ein. Dabei bilden die Schnecke 5 und das Schneckenrad 6 das Schneckengetriebe des Elektromotors. Mittels des Schneckengetriebes wird die Abtriebsrichtung des Elektromotors um 90° gedreht. Wie weiter aus Figur 2 ersichtlich ist, ist unmittelbar benachbart zum Schneckengetriebe ein Planetengetriebe 7 angeordnet. Das Planetengetriebe 7 umfasst ein Sonnenrad 8, zwei Planetenräder 9, welche auf Achsen an einem Steg 10 gelagert sind, und ein innen verzahntes Hohlrad 11. Das Sonnenrad 8 ist dabei einstückig mit dem Schneckenrad 6 gebildet. Dadurch kann ein besonders kompakter Aufbau des Getriebeteils und eine einen kleineren Bauraum einnehmende Verbindung zwischen dem Schneckengetriebe und dem Planetengetriebe erhalten werden. Das Sonnenrad 8 treibt die Planetenräder 9 an, welche sich an dem feststehenden, innen verzahnten Hohlrad 11 abwälzen. Ein Abtrieb aus dem Planetengetriebe 7 erfolgt über den Steg 10.

Wie aus Figur 2 ersichtlich ist, ist der Steg 10 mit einem Abtriebselement 14 verbunden, an welchem ein Abtriebszahnrad 13 angeordnet ist. Das Abtriebselement 14 ist wie das Schneckenrad 6 bzw. das Sonnenrad 8 auf der Welle 12 gelagert. Das Abtriebselement 14 ist derart ausgebildet, dass es leicht austauschbar ist. Dadurch kann eine einfache Adaption des Elektromotors durch einen Austausch des Abtriebselements 14 an kundenspezifische Vorgaben erreicht werden. Somit können für unterschiedlich automatisierte Schaltgetriebe gleiche Elektromotoren verwendet werden, wobei sich die Elektromotoren jeweils nur im Abtriebselement 14 unterscheiden. Eine andere Möglichkeit der Adaption des Elektromotors kann durch einen Austausch des Abtriebszahnrads 13 erreicht werden.

Somit können durch den erfindungsgemäßen Elektromotor durch Verwendung des integrierten Getriebes, welches dem Schneckenradgetriebe nachgeordnet ist, bei gleicher elektrischer Auslegung ein höheres Abtriebsmoment und dadurch höhere Schaltkräfte erreicht werden bzw. bei gleichem Abtriebsmoment ein schwächeres, elektrisches Antriebsteil mit insbesondere kleinerem Bauvolumen erreicht werden.

Der erfindungsgemäße Elektromotor wird als Schaltmotor bzw. Wählmotor in automatisierten Schaltgetrieben verwendet. Da der Bauraum bei derartigen automatisierten Schaltgetrieben ein wichtiges Merkmal ist, müssen die Abmessungen des Elektromotors möglichst klein sein. Durch seinen kompakten Aufbau kann der erfindungsgemäße Elektromotor diese Anforderungen erfüllen. Der erfindungsgemäße Elektromotor betätigt dabei die entsprechenden Aktuatoren für die automatisierten Schaltgetriebe.

## Patentansprüche

1. Elektromotor (1) mit einem an einer Antriebswelle (4) des Elektromotors (1) angeordneten Getriebe (7), wobei zwischen dem Elektromotor (1) und dem Getriebe (7) an einer Ankerwelle (4) des Elektromotors (1) ein Schneckengetriebe mit einer Schnecke (5) und einem Schneckenrad (6) angeordnet ist, wobei der Elektromotor als Schaltmotor und/oder Wählmotor in automatischen Schaltgetrieben verwendbar ist, wobei das Getriebe (7) ein Planetengetriebe mit einem Steg (10) eines Planetenrades (9) ist, wobei das Schneckenrad integral mit dem Eingangszahnrad des Planetengetriebes gebildet ist, **dadurch gekennzeichnet, dass** der Steg (10) des Planetenrades (9) mit einem Abtriebszahnrad (13) verbunden ist, und der Steg (10) und das Abtriebszahnrad (13) in ein weiteres Abtriebselement (14) eingebunden sind, wobei das Abtriebszahnrad (13) austauschbar ausgebildet ist.

2. Elektromotor (1) nach Anspruch 1, **dadurch gekennzeichnet, dass** das Getriebe (7) integraler Bestandteil des Elektromotors ist

3. Elektromotor (1) nach einem der vorhergehenden Ansprüche, **dadurch gekennzeichnet, dass** das Schneckenrad (6) integral mit einem Eingangszahnrad (8) des Getriebes (7) gebildet ist.

4. Elektromotor (1) nach Anspruch 1, **dadurch gekennzeichnet, dass** das Eingangszahnrad (8) des Getriebes ein Sonnenrad des Planetengetriebes ist

5. Elektromotor (1) nach einem der Ansprüche 1 oder 4, **dadurch gekennzeichnet, dass** das Abtriebselement des Planetengetriebes ein Steg (10) eines Planetenrades (9) ist.

6. Elektromotor (1) nach Anspruch 1, **dadurch gekennzeichnet, dass** das Abtriebszahnrad (13) auf einer Welle (12) gelagert ist, wobei das Schneckenrad (6) ebenfalls auf der Welle (12) angeordnet ist.

7. Elektromotor (1) nach einem der Ansprüche 1 bis 6, **dadurch gekennzeichnet, dass** dem Planetengetriebe mindestens ein zweites Planetengetriebe nachgeschaltet ist.

## Claims

1. Electric motor (1) having a gear mechanism (7) which is arranged on a drive shaft (4) of the electric motor (1), with a worm gear mechanism having a worm (5) and a worm gear (6) being arranged between the electric motor (1) and the gear mechanism (7) on an armature shaft (4) of the electric motor (1), it being possible to use the electric motor as a shifting motor and/or selector motor in automated manual gear mechanisms, with the gear mechanism (7) being a planetary gear mechanism with a web (10) of a planetary gear (9), with the worm gear being integrally formed with the input gear wheel of the planetary gear mechanism, **characterized in that** the web (10) of the planetary gear (9) is connected to an output gear wheel (13), and the web (10) and the output gear wheel (13) are incorporated in a further output element (14), with the output gear wheel (13) being of exchangeable design.

2. Electric motor (1) according to Claim 1, **characterized in that** the gear mechanism (7) is an integral constituent part of the electric motor.

3. Electric motor (1) according to either of the preceding claims, **characterized in that** the worm gear (6) is integrally formed with an input gear wheel (8) of the gear mechanism (7).

4. Electric motor (1) according to Claim 1, **characterized in that** the input gear wheel (8) of the gear mechanism is a sun gear of the planetary gear mechanism.

5. Electric motor (1) according to either of Claims 1 and 4, **characterized in that** the output element of the planetary gear mechanism is a web (10) of a planetary gear (9).

6. Electric motor (1) according to Claim 1, **characterized in that** the output gear wheel (13) is mounted on a shaft (12), with the worm gear (6) likewise being arranged on the shaft (12).

7. Electric motor (1) according to one of Claims 1 to 6, **characterized in that** at least a second planetary gear mechanism is connected downstream of the planetary gear mechanism.

## Revendications

1. Moteur électrique (1) comportant une boîte de vitesses (7) sur l'arbre de sortie (4), et entre le moteur électrique (1) et la boîte de vitesses (7), l'arbre d'induit (4) du moteur électrique (1) comporte une boîte de vitesses à vis munie d'une vis (5) et d'une roue à vis (6),
le moteur électrique étant utilisé comme moteur de commutation et/ou comme moteur de sélection dans des boîtes de vitesses automatiques,
la boîte de vitesses (7) étant une boîte de vitesses planétaire avec une entretoise (10) de la roue planétaire (9),
la roue à vis faisant corps avec la roue dentée d'entrée de la boîte de vitesses planétaire,
**caractérisé en ce que**
l'entretoise (10) de la roue planétaire (9) est reliée à la roue dentée de sortie (13) et l'entretoise (10) et la roue dentée de sortie (13) font partie d'un autre élément de sortie (14),
la roue dentée de sortie (13) pouvant être échangée.

2. Moteur électrique (1) selon la revendication 1,
**caractérisé en ce que**
la boîte de vitesses (7) fait partie intégrale du moteur électrique.

3. Moteur électrique (1) selon les revendications précédentes,
**caractérisé en ce que**
la roue à vis (6) fait partie intégrale d'une roue dentée d'entrée (8) de la boîte de vitesses (7).

4. Moteur électrique (1) selon la revendication 1,
**caractérisé en ce que**
la roue dentée d'entrée (8) de la boîte de vitesses est la roue solaire de la boîte de vitesses planétaire.

5. Moteur électrique (1) selon la revendication 1 ou 4,
**caractérisé en ce que**
l'élément de sortie de la boîte de vitesses planétaire est l'entretoise (10) de la roue planétaire (9).

6. Moteur électrique (1) selon la revendication 1,
**caractérisé en ce que**
la roue dentée de sortie (13) est montée sur un arbre (12), et la roue à vis (6) est également montée sur cet arbre (12).

7. Moteur électrique (1) selon les revendications 1 à 6,
**caractérisé en ce qu'**
au moins une seconde boîte de vitesses planétaire est prévue en aval de la boîte de vitesses planétaire.
